(19) Europäisches Patentamt
European Patent Office
Office européen des brevets

(11) Veröffentlichungsnummer: **0 008 125**
**B1**

(12) # EUROPÄISCHE PATENTSCHRIFT

(45) Veröffentlichungstag der Patentschrift: **14.10.81**

(51) Int. Cl.³: **B 05 D 7/16**, C 09 D 5/08, C 09 D 3/48, C 08 L 67/00

(21) Anmeldenummer: **79102922.6**

(22) Anmeldetag: **13.08.79**

(54) **Verfahren zur Herstellung von korrosionsfesten Beschichtungen.**

(30) Priorität: **14.08.78 DE 2835617**

(43) Veröffentlichungstag der Anmeldung: **20.02.80 Patentblatt 80/4**

(45) Bekanntmachung des Hinweises auf die Patenterteilung: **14.10.81 Patentblatt 81/41**

(84) Benannte Vertragsstaaten: **AT BE CH DE FR GB IT NL SE**

(56) Entgegenhaltungen:
**FR-A-2 295 990**
**FR-A-2 334 727**
**GB-A-1 069 661**
**CHEMICAL ABSTRACTS, Vol. 81, Nr. 8, 26. August 1974 Columbus, Ohio, USA & JP-A-73 58 090 (JAPAN ESTER)**

(73) Patentinhaber: **HOECHST AKTIENGESELLSCHAFT, Zentrale Patentabteilung Postfach 80 03 20, D-6230 Frankfurt/Main 80 (DE)**

(72) Erfinder: **Esser, Klaus, Lauterbacher Strasse 27, D-6000 Frankfurt am Main 61 (DE)**
Erfinder: **Dürr, Helmut, Dr., Hansaallee 111, D-6000 Frankfurt am Main (DE)**
Erfinder: **Plath, Dieter, Dr., Hildastrasse 32, D-6200 Wiesbaden (DE)**

**EP 0 008 125 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung von korrosionsfesten Beschichtungen

In der Industrielackierung spielt nach wie vor die Autolackierung die bedeutendste Rolle. Bekanntlich werden Automobilkarosserien zunächst mit einer Phosphatschicht versehen und anschließend mit einer Elektrotauch-Grundierung beschichtet. Auf diese Grundierung wird ein Füller auf Basis eines hydroxylgruppenhaltigen Polymerisats wie Polyester und/oder Epoxydharz, der als Härter ein veräthertes Amin-Formaldehydharz wie Harnstoff- oder Melamin-Formaldehyd-Kondensationsprodukte enthält, aufgebracht, der den Zweck hat, einen guten Decklackstand und eine einwandfreie Ausbildung der Oberfläche zu gewährleisten. Unter Decklackstand versteht man, daß der auf die Grundierung aufgebrachte Decklack nicht in den Untergrund einsinkt. Nach dem Anschleifen einzelner Stellen des Füllers wird die Decklackierung aufgebracht. Wesentlich ist, daß jede Schicht für sich allein eingebrannt werden muß, was naturgemäß mit einem hohen Energieaufwand verbunden ist. Obwohl man mit den derzeitigen Lackierverfahren einen sehr guten Korrosionsschutz und eine ausgezeichnete Wetterbeständigkeit der Fahrzeuglackierung erreichen kann, ist die Automobilindustrie bemüht, bei Erhalt der hervorragenden Eigenschaften eine Rationalisierung und damit eine Verbilligung des ehr aufwendigen Lackierverfahrens zu erreichen.

Ein Versuch, die Autolackierung zu rationalisieren, stellt das sogenannte »Reverse«-Verfahren dar. Bei diesem Verfahren wird ein Pulverfüller elektrostatisch auf die Karosserie aufgebracht und unter den für das Füllermaterial geeigneten Bedingungen eingebrannt. Die beim elektrostatischen Auftrag nicht beschichteten und lackierten Teile der Karosserie werden anschließend mit einer Elektrotauch(ET)-Grundierung versehen, indem die gesamte Karosserie eingetaucht wird, so daß danach die gesamte metallische Oberfläche durch einen Lackfilm vor Korrosion geschützt ist. Mit dem Aushärten dieses Elektrotauchlackes wird auch die Vernetzung des Pulverfüllers vervollständigt. Nach Schleifen des Füllers (das Schleifen eines Pulverfüllers bedeutet einen enormen Arbeitsaufwand) wird der Decklack aufgebracht und eingebrannt.

Im Unterschied zum herkömmlichen Verfahren, bei dem normalerweise eine Dreischichten-Lackierung vorgenommen wird, wird somit beim »Reverse«-Verfahren, betrachtet man die gesamte Karosserie, zwar kein Arbeitsgang, aber eine Lackschicht eingespart. Obwohl dieses Verfahren sehr große Vorteile bietet, haben einige gravierende Mängel verhindert, daß das Verfahren im größeren Maßstab in der Automobilindustrie Eingang gefunden hat. Die größten Hindernisse stellen einmal die hohen Investitionskosten für die Pulverbeschichtungsanlage dar, zum anderen der enorme Aufwand, der für das Schleifen getrieben werden muß, um die Oberflächenqualität der derzeitigen Automobillackierung zu erreichen.

Das schwierigste Problem überhaupt stellt aber die Randzone zwischen Pulverfüller und ET-Grundierung dar, da eine Überlappung der Lackschichten nicht erfolgt und hier bevorzugt Korrosion einsetzt. Ein weiterer wesentlicher negativer Faktor ist der hohe Energiebedarf, der bei der Verarbeitung von Pulverlacken erforderlich ist. Darüber hinaus ist es schwierig, dünne und gleichmäßige Schichten zu erzielen. Während der Montage entstandene Beschädigungen sind bei Pulverfüllern nur schwierig auszubessern.

Man hat auch versucht, konventionelle, d. h. lösungsmittelhaltige Einbrennfüller, die im Spritzverfahren aufgetragen werden, auf Basis von Kombinationen von Polyester-, Alkyd- und Epoxyharzen mit Aminharzen wie verätherten Harnstoff- oder Melamin-Formaldehyd-Kondensationsprodukten im »Reverse«-Verfahren zu erproben. Dabei hat sich aber gezeigt, daß das Korrosionsproblem in der Randzone der beiden Lacksysteme nicht befriedigend zu lösen ist. Die vom Füller stammende dünne, mehr oder weniger zusammenhängende Schicht, gebildet durch »Spritzstaub« in der Randzone, isoliert bei einer nachfolgenden Elektrotauchlackierung so gut, daß an diesen Stellen keine Abscheidung der suspendierten Teilchen erfolgt. Dies bedeutet, daß die Randzone teilweise durch den Spritzstaub des Füllers, dessen Schichtdicke dort im allgemeinen unter 5 µm liegt, nicht ausreichend geschützt wird, so daß dieses Verfahren trotz gewisser Vorteile für die Anwendung in der Praxis nicht geeignet ist.

Gegenstand der Erfindung ist nun ein Verfahren, bei dem mit einem lösungsmittelhaltiger Füller gearbeitet wird und bei dem völlig überraschend die angeführten Nachteile bezüglich Korrosion in der Randzone Füller-ET-Grundierung wegen der speziellen Natur der nachstehend genannten Komponente B nicht auftreten.

Nach diesem Verfahren stellt man Überzüge in zwei Stufen her, wobei auf ein Substrat 1) als Füller ein lösungsmittelhaltiger Lack aus A) einer hydroxylgruppenhaltigen oligomeren und/oder polymeren Verbindung, B) einem Vernetzer und weiteren üblichen Zusätzen aufgebracht und bis zur Wasserfestigkeit gehärtet wird und anschließend 2) eine weitere Lackschicht durch Elektrotauchlakkierung aufgetragen und beide Schichten gehärtet werden, wobei gemäß der Erfindung zur Herstellung von Überzügen, in deren Überlappungszone am Rand des Überzugs die Schichtdicke des Füllers wenigstens so stark ist wie die durch Elektrotauchlackierung aufgebrachte Deckschicht als Vernetzer B) des Füllers ein Trimellithsäure enthaltendes Polycarbonsäuregemisch eingesetzt wird und das Verhältnis der Komponente A) zu Komponente B) 50 : 50 bis 90 : 10 beträgt.

Bei dem erfindungsgemäßen Verfahren wird der Spritzstaub und der in der Randzone dünn

ausgebildete Film des Füllers von der ET-Grundierung überdeckt, die sogar, und das ist für den guten Korrosionsschutz wichtig, noch mehrere Zentimeter die Füllerlackierung überschichtet. In der Überlappungszone der Beschichtung von Füller und ET-Grundierung fällt die Gesamtschichtdicke in keinem Falle unter die der ET-Grundierung. Aus diesem Grund ist der Korrosionsschutz in der Randzone hervorragend. Aber auch eventuelle Fehlstellen in der Füllerbeschichtung, bei denen die Schichtdicke dünner als durchschnittlich ist, werden durch die ET-Lackierung mitbeschichtet, so daß diese Fehlstellen nicht auftreten. Das ist dadurch bedingt, daß eine dünne Schicht des erfindungsgemäß verwendeten Füllers die bei der ET-Grundierung erforderliche Abscheidungsspannung nicht blockiert. Damit bietet dieses Verfahren im Vergleich zum Pulverfüller-ET-Lack-System folgende Vorteile:

1) Füller und ET-Grundierung überlappen sich; daher treten keine Korrosionsprobleme in der Randzone auf
2) Kein erhöhter Aufwand für das Schleifen gegenüber konventionellen Systemen
3) Keine Probleme mit der Schichtdicke
4) Beseitigung von Fehlstellen in der Füllergrundierung
5) Leichte Ausbesserungsmöglichkeiten
6) Keine Probleme mit der Pigmentierung
7) Einsparung von Energie (niedrige Einbrenntemperaturen)
8) Keine Investitionskosten, da die üblichen Anlagen verwendet werden können.

Geeignete Oligomere und Polymere der Komponente A des Füllers sind beispielsweise gesättigte oder ungesättigte ölfreie Polyester mit freien OH-Gruppen. Sie können aus bekannten Polycarbonsäuren wie Phthalsäure, Isophthalsäure, Terephthalsäure, Trimellithsäure, Fumarsäure, Maleinsäure, Endomethylentetrahydrophthalsäure, Bernsteinsäure, Adipinsäure, Korksäure, Azelainsäure, Sebacinsäure, alkylsubstituierten Verbindungen dieser Säuren sowie deren möglichen Anhydriden hergestellt werden. Geeignete Alkoholkomponenten dieser Polyester sind z. B. bekannte mehrwertige Alkohole, wie Äthylenglykol, die Propandiole, Butandiole, Pentandiole, wie Neopentylglykol, Hexandiole, Diäthylenglykol, Glycerin, Trimethyloläthan, Trimethylolpropan, Pentaerythrit und Dipentaerythrit.

Geeignete Oligomere und Polymere der Komponente A sind auch Acrylharze, wie sie beispielsweise durch Mischpolymerisation von Alkylestern der Acryl- bzw. Methacrylsäure, deren Alkoholkomponente 1—8 Kohlenstoffatome hat, mit Hydroxyäthyl- bzw. Hydroxypropylestern der Acryl- bzw. Methacrylsäure erhalten werden. Die Alkoholkomponente kann sich beispielsweise von Methyl-, Äthyl-, n- oder iso-Propyl-, n-, iso- oder tert.-Butylalkohol, den verschiedenen Pentanolen, Hexanolen, Heptanolen und Octanolen ableiten. Derartige Acrylharze können auch durch Einpolymerisation von üblichen aromatischen Vinylmonomeren, wie Styrol, den verschiedenen Vinyltoluolen und $\alpha$-Methylstyrol, z. B. in einem Gewichtsanteil bis zu 50 Gew.-% des Gesamtgewichts, modifiziert sein.

Trimellithsäurehaltige Polycarbonsäuregemische Komponente B) sind solche, die Verbindungen der Formeln (I) bis (III) (siehe Formelblatt) enthalten und in der deutschen Patentanmeldung P 27 07 018.4 offenbart sind. In den Formeln (I) bis (III) sind

| | |
|---|---|
| R, R′ und R″ | gleich oder verschieden und 2- bis 6wertige, vorzugsweise 2wertige geradkettige oder verzweigte Kohlenwasserstoffe mit insgesamt 1 bis 12, vorzugsweise 2 bis 6 C-Atomen, die gegebenenfalls bis zu zwei olefinische Doppelbindungen aufweisen oder durch bis zu drei Ätherbrücken unterbrochen sind, |
| x und y | eine ganze Zahl von 2 bis 6, |
| t | eine ganze Zahl von 1 bis 5 und |
| z und u | Null oder eine ganze ganze Zahl von 1 bis 5 |

wobei in den hier nur linear, d. h. für zweiwertige Reste R, R′ und R″ wiedergegebenen Formeln außer bei den Resten R′ und R″ auch bei dem Rest R Verzweigungen vorliegen können. Derartige verzweigte Polycarbonsäuren lassen sich durch eine einzige Formel nicht ohne weiteres darstellen. Wenn aufgrund der möglichen höheren Wertigkeit als 2 von R, R′ und R″ die Verbindungen I) bis III) verzweigt sind, können in den verschiedenen Zweigen die Indices x, y und z gleich oder verschieden sein. Verbindungen der Formel (I) sind z. B. mehrere Estergruppen aufweisende Ester der Trimellithsäure mit mehrwertigen, beispielsweise 2- bis 6wertigen gesättigten oder ungesättigten Alkoholen mit 2 bis 12 C-Atomen, einschließlich solchen mit bis zu 3 Äthergruppen. Geeignete Alkohole für die Herstellung dieser Verbindungen sind z. B. die bereits obengenannten Diole, sowie deren höhere Homologen bzw. ihre ungesättigten Analogen, z. B. Butendiole, ferner weitere Oligomere des Äthylenglykols, sowie die oben genannten höherwertigen Alkohole, wobei die Diole bevorzugt sind.

Geeignete Verbindungen der Formeln (I), (II) und (III) sind beispielsweise solche, in denen R, R′ und R″ vorzugsweise zweiwertig sind, aber je nach der Struktur und Wertigkeit des Ausgangsalkohols auch verzweigt sein können. In Formeln (II) und (III) sind R, R′ und R″ gleich oder verschieden und haben die oben für R angegebene Bedeutung.

Typische Reste R,R′ und R″ sind z. B. $-(CH_2)_n-$, worin n = 2 bis 10, ist

$$-CH_2-\underset{\displaystyle CH_3}{\underset{|}{CH}}- \qquad -CH_2-CH=CH-CH_2-$$

$$-CH_2-CH_2-O-CH_2-CH_2- \qquad -CH_2-\underset{|}{CH}-CH_2-$$

ferner solche der Formeln (IV) (siehe Formelblatt).

Die Verbindungen der Formel (II) sind also, wenn x = 2 ist, Diestertetracarbonsäuren und, wenn x = 3 ist, Triesterhexacarbonsäuren. Die Verbindungen der Formel (III) stellen beispielsweise oligomere Polycarbonsäuren mit mehreren Estergruppen dar.

Die Verbindungen der Formeln (I) bis (III) lassen sich z. B. durch Hydrolyse eines Anhydridgruppen enthaltenden Gemisches, wie es bei der Umsetzung von Trimellithsäureanhydrid mit den entsprechenden zwei- und/oder höherwertigen Alkoholen in an sich bekannter Weise erhalten wird, herstellen. Dies kann mit oder ohne Lösungsmittel erfolgen. Wird in Gegenwart eines Lösungsmittels hydrolysiert, so kann man durch vorsichtiges Abdestillieren, gegebenenfalls unter vermindertem Druck, auch lösungsmittelfreie Polycarbonsäuregemische erhalten. In vielen Fällen ist es aber möglich, ein Lösungsmittelgemisch so zu wählen, daß man für die Weiterverarbeitung geeignete Polycarbonsäurelösungen erhält. Besonders einfach gestaltet sich die Hydrolyse, wenn zu einer Schmelze oder einer Lösung eines Anhydridgemisches bei erhöhter Temperatur die für die Hydrolyse erforderliche Wassermenge zugegeben wird. Zur Vervollständigung der Hydrolyse wird noch einige Zeit bei dieser Temperatur nachgerührt.

Geeignete Lösungsmittel sind beispielsweise Äthylenglykolmonobutyläther-acetat, Butylacetat, Methylisobutylketon oder Mischungen daraus, z. B. aus Äthylenglykolmonobutylätheracetat und Xylol, z. B. im Verhältnis 1 : 1 bis 1 : 3.

Zur Charakterisierung der Anhydridgruppen enthaltenden Gemische eignet sich insbesondere die Gel-Permeations-Chromatographie (GPC) an mit Divinylbenzol vernetztem Polystyrolgel als Sorptionsmittel und mit Tetrahydrofuran als Elutionsmittel. Mit dieser Methode gelingt es, die Anhydridgemische in ihren Einzelkomponenten genau zu bestimmten, so daß der jeweilige Anteil der einzelnen Komponenten leicht und genau eingestellt werden kann. So lassen sich die Verbindungen der Formeln (I) bis (III) nach ihrer Struktur und Menge genau erfassen.

Zweckmäßig beträgt in der Komponente B) der Gehalt an Verbindungen der Formeln (I) bis (III) 70 bis 99,8, vorzugsweise 80 bis 95 Gew.-% und derjenige an Trimellithsäure 0,1 bis 30, vorzugsweise 5 bis 20 Gew.-%.

Der Gehalt an oligomeren Polycarbonsäuren (Formel (III)) innerhalb des Gemisches der Verbindungen der Formeln (I) bis (III) kann zwischen 0,1 und 99,8, vorzugsweise zwischen 30 und 70% liegen. Außerdem können die Polycarbonsäurehärter aus Mischungen von Einzelkomponenten mit unterschiedlichen Resten R, R′ und R″ und Indices x, y, z, t und u bestehen.

Sehr wichtig ist das Mischungsverhältnis von Komponenten A), dem Polyester zur Komponente B), dem Polycarbonsäuregemisch. Ein zu hoher Anteil an Polycarbonsäure führt zu sehr harten und spröden Filmen. Wird die Komponente B) in zu geringen Mengen eingesetzt, sind die Durchhärtung und damit die Filmeigenschaften mangelhaft. Im allgemeinen hat sich ein Festkörperverhältnis der Komponenten A) zu B) von 50 : 50 bis 90 : 10, vorzugsweise 60 : 40 bis 85 : 15, im speziellen jedoch 65 : 35 bis 75 : 25, bewährt.

Die Einbrennbedingungen sowohl bei der Füller-Lackierung als auch bei der ET-Grundierung lassen sich in einem weiten Bereich variieren. Filme mit guten Eigenschaften und hervorragender Überlappung der Grenzzone durch die ET-Grundierung erhält man bei folgenden Einbrennbedingungen: 1 bis 60 Minuten bei Temperaturen von 80 bis 300° C, vorzugsweise 8 bis 40 Minuten bei 100 bis 170° C, insbesondere 15 bis 25 Minuten bei 115 bis 140° C. Durch Varianten der Einbrenntemperatur und Zeit läßt sich die Breite der Überlappungszone den technischen Erfordernissen anpassen.

Ein Vorteil bei der Verwendung des erfindungsgemäß eingesetzten Füllers liegt darin, daß er schon unter milden Einbrennbedingungen, z. B. 40 Minuten bei 100° C bis 8 Minuten bei 150° C, vorzugsweise 20 Minuten bei 120° C, einen wasserfesten Film bildet und dadurch die nachfolgende ET-Beschichtung möglich macht.

Die endgültige Vernetzung findet zusammen mit der Aushärtung der ET-Grundierung statt. Dabei resultieren Filme von hervorragender Härte, sehr guter Haftfestigkeit, Schlagfestigkeit und Elastizität. Sehr bemerkenswert ist, daß die guten mechanischen Eigenschaften des Füllers auch beim Überbrennen erhalten bleiben.

Die Breite der Überlappung von ET-Grundierung und Füller beträgt im allgemeinen 2 bis 150 mm und kann durch Variation der Einbrennbedingungen und der Schichtdicke des Füllers den technischen Anforderungen entsprechend gesteuert werden. Ein weiterer Vorteil ist darin zu sehen, daß die Gesamtschichtdicke in der Überlappungszone immer größer ist als die der ET-Grundierung. Sie bildet sich add. 'v aus der Schichtdicke des an dieser Stelle vorhandenen Füllers und der aufgebrachten

Elektrotauchlackierung. Diese größere Schichtdicke ist deshalb besonders wichtig, weil gerade in der Randzone der beiden Lacksysteme verstärkt Korrosion eintreten kann. Wie sich im Salzsprühtest nach SS DIN 50 021 bzw. Salzsprühnebel DIN 53 167 gezeigt hat, ist die Korrosionsbeständigkeit in der Überlappungszone genau so hervorragend wie in der Fläche der ET-Grundierung bzw. des Füllers. Mithin ist es nach diesem Verfahren möglich, eine Lackschicht einzusparen ohne eine Verminderung der Korrosionsbeständigkeit des Substrates und der übrigen lacktechnischen Eigenschaften.

In welcher Form die ET-Grundierung aufgebracht wird, ist für das erfindungsgemäße Verfahren unerheblich. Es können alle heute üblichen ET-Verfahren angewendet werden, z. B. auch anaphoretische Verfahren als auch die Kata- und Autophorese.

Sowohl der Füller als auch die bei der ET-Grundierung eingesetzten Mischungen können auch übliche Zusätze wie Farbstoffe, Pigmente, Füllstoffe, Weichmacher, Stabilisatoren, Netzmittel, Dispergierhilfsmittel, Verlaufmittel und Katalysatoren in den üblichen Mengen enthalten. Diese Substanzen können den Einzelkomponenten und/oder der Gesamtmischung zugesetzt werden.

Als Farbstoffe bzw. Pigmente, die anorganischer oder organischer Natur sein können, werden beispielsweise genannt: Titandioxyd, Graphit, Ruß, Zinkchromat, Strontiumchromat, Bariumchromat, Bleichromat, Bleicyanamid, Bleisilikochromat, Calciummolybdat, Manganphosphat, Zinkoxyd, Cadmiumsulfid, Chromoxyd, Zinksulfid, Nickeltitangelb, Chromitangelb, Eisenoxydrot, Eisenoxydschwarz, Ultramarinblau, Phthalocyaninkomplexe, Naphtholrot oder dergleichen.

Geeignete Füllstoffe sind z. B Talkum, Glimmer, Kaolin, Kreide, Quarzmehl, Asbestmehl, Schiefermehl, Bariumsulfat, verschiedene Kieselsäuren, Silikate, Glasfasern, organische Fasern oder dergleichen.

Für die Füller werden die üblichen Lösungsmittel verwendet, beispielsweise aliphatische und aromatische Kohlenwasserstoffe, ein- und mehrwertige Alkohole, Äther, Ester, Glykoläther sowie deren Ester, Keton, Chlorkohlenwasserstoffe, Terpenderivate, wie Toluol, Xylol, Butanol, Äthyl- und Butylacetat, Äthylenglykolmonoäthyl- oder -butyläther sowie deren Acetate, Äthylenglykoldimethyläther, Diäthylenglykoldimethyläther, Cyclohexanon, Methyläthylketon, Aceton, Isophoron oder Mischungen davon.

Die Schichtdicken der einzelnen Lacküberzüge betragen bei dem Füller 20 bis 70, vorzugsweise 30 bis 50 µm, während die ET-Grundierung Stärken von 10 bis 40, vorzugsweise 15 bis 25 µm aufweist.

Die in den nachfolgenden Beispielen angeführten Symbole T und % beziehen sich stets auf das Gewicht.

## Beispiele

1.) Ein Polyester (60%ig, gelöst in einem aromatischen Kohlenwasserstoffgemisch vom Siedebereich 180 bis 210°C und Äthylenglykolmonobutyläther im Verhältnis 3 : 1, Viskosität bei 20°C 1300 bis 1500 mPa · s, OH-Zahl ca. 105, Säurezahl $<10$, auf Basis von 39,6 T Phthalsäureanhydrid, 21,8 T Adipinsäure, 31,4 T Neopentylglykol und 14,2 T Trimethylolpropan) wird mit einem Polycarbonsäuregemisch (60%ig in Äthylglykolacetat (= Essigsäureester des Äthylenglykolmonoäthyläthers), Säurezahl in Wasser 240, auf Basis von 44,7 T Trimellithsäureanhydrid 9,2 T Propylenglykol, 3,0 T Trimethylolpropan und 2,6 T eines nichtionogenen Netzmittels auf Basis von Nonylpolyglykoläther) in einem Verhältnis von 70 : 30 (berechnet auf Festharz) gemischt. 55,6 T dieser Mischung werden mit 16,7 T Titandioxyd, 16,7 T Bariumsulfat, 0,1 T Gasruß, 0,5 T Kieselsäure und 0,1 T eines Verlaufmittels auf Basis Polyacrylat, sowie 10,4 T eines Lösungsmittelgemisches aus Äthylenglykolmonobutyläther und Äthylglykolacetat (im Verhältnis 60 : 40) zu einem Lack verarbeitet. Durch Zugabe von Butylacetat wird dieser Lack auf eine zum Spritzen geeignete Auslaufzeit (DIN 53 211), bei 20°C von 20 bis 30 Sekunden verdünnt und auf eine Hälfte eines phosphatierten Stahlbleches so aufgesprüht, daß eine Trockenfilmstärke von 40 µm erzielt wird. Die aufgetragene Schicht wird 17 Minuten bei 130°C eingebrannt. Anschließend wird das Stahlblech einer ET-Grundierung unter Verwendung eines Lackes folgender Zusammensetzung unterworfen:

75,9 T eines mit einem Polybutadien-Maleinsäure-Addukt plastifizierten Phenolharzes (70%ig in Glykoläthern) 12,4 T Titandioxyd, 11,5 T Aluminiumsilikat und 0,3 T Gasruß. Diese Mischung wird mit 6,7 T wäßrigem Ammoniak (10%ig) und 430 T deionisiertem Wasser zu einem Bad mit ca. 14% Feststoffanteil eingestellt. Die ET-Beschichtung wird bei 25 bis 30°C und 200 bis 300 Volt in 90 bis 120 Sekunden vorgenommen. Schichtstärke 20 µm. Die aufgetragenen Lackschichten werden 30 Minuten bei 180°C eingebrannt. Die erzielten Ergebnisse können der nachfolgenden Tabelle entnommen werden.

2. und 3.) Beispiel 1 wird wiederholt mit dem Unterschied, daß das Festkörperverhältnis von Polyester zu Polycarbonsäuregemische 50 : 50 bzw. 90 : 10 beträgt.

## Vergleichsbeispiel 1

Beispiel 1 wird wiederholt mit dem Unterschied, daß als Härterkomponente ein mit Methanol veräthertes Melaminharz (75%ig in Isobutanol, Molverhältnis Melamin zu Formaldehyd = 1 : 6,

veräthert mit 4 Mol Methylalkohol, dynamische Viskosität 3000 bis 9000 mPas·/20° C, Säurezahl <1) eingesetzt wird. Die Einbrennbedingungen der Füllerbeschichtung werden zusätzlich auf 17 Minuten bei 90° C variiert.

Vergleichsbeispiel 2

Beispiel 1 wird wiederholt mit dem Unterschied, daß als hydroxylgruppenhaltige Harzkomponente eine Mischung eines mittelöligen Ricinenalkydharzes (60% in Xylol mit einem Gehalt von ca. 37 Gew.-% an Phthalsäureanhydrid, dynamische Viskosität (50%ig in Xylol), 300 bis 450 mPa·s/20° C, Säurezahl <35) und einem Epoxydharz auf Basis Bisphenol A — Epichlorhydrin (75%ig in Xylol, Epoxyd-Äquivalent 450 bis 525, Erweichungspunkt 65 bis 75° C, dynamische Viskosität 5700 bis 14 000 mPa·s/20° C) und als Härterkomponente ein butyliertes Harnstoff-Formaldehydharz (60%ig in Isobutanol, Molverhältnis Harnstoff/Formaldehyd = 1 : 2,15, veräthert mit 0,85 Mol Isobutanol, dynamische Viskosität 500 bis 800 mPa·s/20° C, Säurezahl <3) eingesetzt wird. Die Einbrennbedingungen bei der Füllerlackierung werden zusätzlich auf 17 Minuten bei 80° C variiert.

Tabelle

| Beispiel | Harz | Härter | Einbrennbedingungen Füller | Einbrennbedingungen ET-Grundierung | Überlappungszone Füller/ ET-Grundierung/ mm/ |
|---|---|---|---|---|---|
| 1 | A 38,9 T | B 16,7 T | 17′ 130°C | 30′ 180°C | 50*) |
| 2 | A 27,8 T | B 27,8 T | 17′ 130°C | 30′ 180°C | 20*) |
| 3 | A 50,0 T | B 5,6 T | 17′ 130°C | 30′ 180°C | 100*) |
| V 1 | A 38,9 T | C 13,3 T | a) 17′ 130°C | 30′ 180°C | keine |
| | | | b) 17′ 90°C | 30′ 180°C | keine |
| V 2 | D 44,7 T<br>E 4,6 T | F 5,6 T | a) 17′ 130°C | 30′ 180°C | keine |
| | | | b) 17′ 80°C | 30′ 180°C | keine |

A Polyesterharz
B Polycarbonsäuregemisch
C Melaminharz

D Ricinenalkydharz
E Epoxydharz
F Harnstoff-Formaldehydharz

*) Schichtdicke wenigstens so stark wie die der ET-Grundierung

Formelblatt

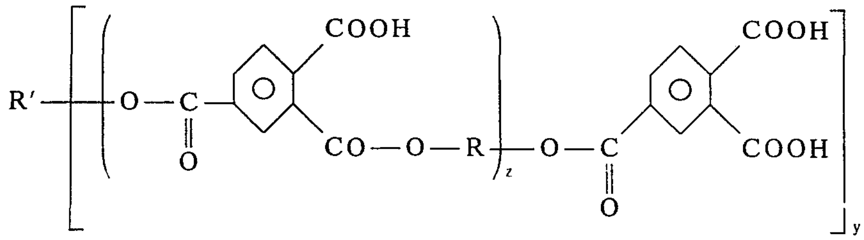

(I)

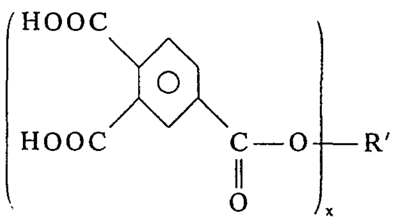

(II)

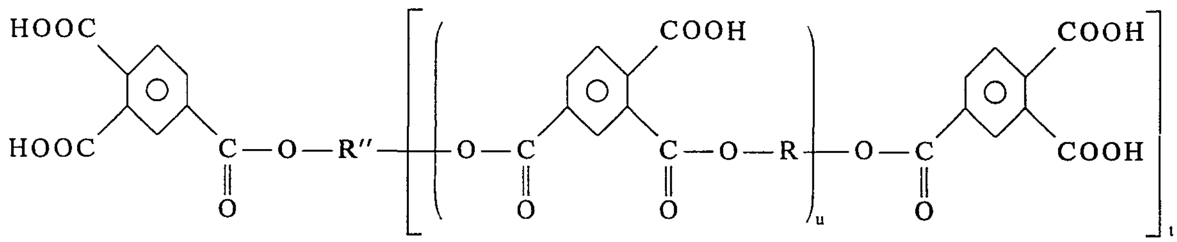

(III)

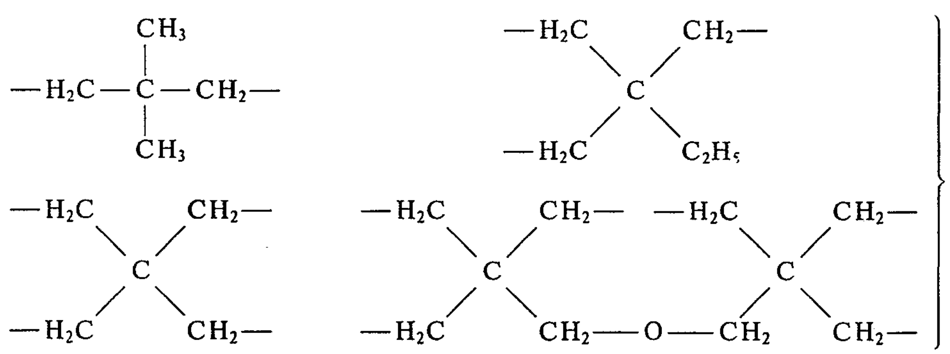

(IV)

**Patentansprüche**

1. Verfahren zur Herstellung von Überzügen in zwei Stufen, wobei auf ein Substrat 1) als Füller ein lösungsmittelhaltiger Lack aus A) einer hydroxylgruppenhaltigen oligomeren und/oder polymeren Verbindung, B) einem Vernetzer und weiteren üblichen Zusätzen aufgebracht und bis zur Wasserfestigkeit gehärtet wird und anschließend 2) eine weitere Lackschicht durch Elektrotauchlackierung aufgetragen und beide Schichten gehärtet werden, dadurch gekennzeichnet, daß zur Herstellung von Überzügen, in deren Überlappungszone am Rand des Überzugs die Schichtdicke des Füllers wenigstens so stark ist wie die durch Elektrotauchlackierung aufgebrachte Deckschicht, als Vernetzer B) des Füllers ein Trimellithsäure enthaltendes Polycarbonsäuregemisch eingesetzt wird und daß das Verhältnis der Komponente A) zur Komponente B) von 50 : 50 bis 90 : 10 beträgt.

2. Verfahren nach Anspruch 1, dadurch gekennzeichnet, daß das Verhältnis der Komponente A) zu Komponente b) 60 : 40 bis 85 : 15, vorzugsweiese 65 : 35 bis 75 : 25 beträgt.

3. Verfahren nach Anspruch 1 oder 2, dadurch gekennzeichnet, daß die aufgetragenen Schichten während 8 bis 40 Minuten bei 100 bis 170°C, vorzugsweise 15 bis 25 Minuten bei 115 bis 140°C eingebrannt werden.

4. Verfahren nach einem oder mehreren der Ansprüche 1 bis 3, dadurch gekennzeichnet, daß die Komponente A ein Polyester oder ein Acrylharz ist.

5. Verfahren nach einem oder mehreren der Ansprüche 1 bis 4, dadurch gekennzeichnet, daß ein Überzug hergestellt wird, in dessen Überlappungszone die Schichtdicke des Füllers bei der ET-Grundierung 10 bis 40, vorzugsweise 15 bis 25 µm beträgt.

6. Verfahren nach einem oder mehreren der Ansprüche 1 bis 5, dadurch gekennzeichnet, daß ein Überzug hergestellt wird, dessen Überlappungszone zwischen Füller und ET-Grundierung 2 bis 150 mm beträgt.

**Claims**

1. Process for the production of coatings in two stages, in which process 1) a solvent-containing lacquer consisting of A) an ologimeric and/or polymeric compound containing hydroxyl groups, B) a crosslinking agent and further conventional additives is applied, as the filler, to a substrate and cured unitil it is water-resistant and subsequently 2) a further lacquer coating is applied by electro-dipcoat lacquering and the two coats are cured, characterized for the production of coatings in the overlap zone in that which at the border of the coating the layer thickness of the filler is a least as high as the top layer applied by electro-dipcoat lacquering, a polycarboxylic acid mixture containing trimellitic acid is used as the crosslinking agent B) in the filler and the ratio of component A) to B) is from 50 : 50 to 90 : 10.

2. Process as claimed in claim 1, wherein the ratio of component A) to component B) is 60 : 40 to 85 : 15, preferably 65 : 35 to 75 : 25.

3. Process as claimed in claim 1 or 2, wherein the coatings applied are stoved for 8 to 40 minutes at 100 to 170° C, preferably for 15 to 25 minutes at 115 to 140° C.

4. Process as claimed in one or more of claims 1 to 3, wherein component A is a polyester or an acrylic resin.

5. Process as claimed in one or more of claims 1 to 4 wherein a coating is prepared in the overlap zone of which the layer thickness of the filler of the ED primer is 10 to 40, preferably 15 to 25 µm.

6. Process as claimed in one or more of claims 1 to 5, wherein a coating ist prepared in which the overlap zone between the filler and the ED primer ist 2 to 150 mm.

**Revendications**

1. Procédé de fabrication de revêtements en deux stades, consistant à appliquer sur un substrat 1) comme base, une laque contenant des solvants, constituée A) d'un composé oligomère et/ou polymère hydroxylé, B) d'un agent de réticulation et d'autres charges usuelles, et à durcir jusqu'à obtention de la résistance à l'eau, puis 2) à appliqueur une autre couche de laque par laquage par électro-immersion et à durcir les deux couches, procédé caractérisé en ce que pour la fabrication de revêtements dans la zone de recouvrement desquels, sur le bord du revêtement, l'épaisseur de couche de base est au moins égale à celle de la couche finale appliquée par laquage par électro-immersion, on utilise comme agent de réticulation B) de la base un mélange d'acides polycarboxyliques contenant de l'acide trimellitique et en ce que le rapport de mélange du constituant A) au constituant B) est de 50 : 50 à 90 : 10.

2. Procédé suivant la revendication 1, caractérisé en ce que le rapport du constituant A) au constituant B) est de 60 : 40 à 85 : 15, de préférence de 65 : 35 à 75 : 25.

3. Procédé suivant la revendication 1 ou 2, caractérisé en ce que les couches appliquées sont cuites pendant 8 à 40 minutes à une température de 100 à 170°C, de préférence 15 à 25 minutes à une température de 115 à 140° C.

4. Procédé suivant l'une ou plusieurs des revendications 1 à 3, caractérisé en ce que le constituant A est un polyester ou une résine acrylique.

5. Procédé suivant l'une ou plusieurs des revendications 1 à 4, caractérisé en ce qu'on fabrique un revêtement dans la zone de recouvrement duquel l'épaisseur de couche de base, dans le cas de l'application de la couche de fond E. I., est de 10 à 40, de préférence de 15 à 25 microns.

6. Procédé suivant l'une ou plusieurs des revendications 1 à 5, caractérisé en ce qu'on fabrique un revêtement dont la zone de recouvrement entre base et couche de fond E. I. est de 2 à 150 mm.